# EUROPEAN PATENT SPECIFICATION

(11) **EP 4 141 304 B1**
(45) Date of publication and mention of the grant of the patent: **09.07.2025**
(21) Application number: 22193339.3
(22) Date of filing: 31.08.2022
(51) Int. Cl.: F16K 41/10, F16K 17/04, F16K 17/168, F24H 9/13, F24H 9/20, F24D 19/08

(54) **ADJUSTABLE PRESSURE RELIEF VALVE**
EINSTELLBARES DRUCKENTLASTUNGSVENTIL
SOUPAPE DE DÉCHARGE DE PRESSION RÉGLABLE

(30) Priority: 31.08.2021 SK 1252021 U
(43) Date of publication of application: 01.03.2023
(73) Proprietor: Vaillant GmbH, 42859 Remscheid NRW (DE); Protherm Production s.r.o., 909 01 Skalica (SK)
(72) Inventor: Vanek, Anton, 90901 Skalica (SK)
(74) Representative: Popp, Carsten

(56) References cited:
- EP-A1- 0 648 965
- EP-A2- 1 279 875
- CN-A- 104 989 856
- DE-A1- 102010 045 280
- FR-A3- 2 498 306
- FR-A3- 2 748 541
- FR-A3- 2 872 881
- US-A1- 2004 036 050

## Description

### Field of the invention

The invention refers to an adjustable pressure relief valve intended for use in a heating device with a closed circuit of a heating medium.

### Prior art

The invention refers to a pressure relief valve, which is commonly used in heating devices with a closed circuit of a heating medium, for example in hanging hot water boilers, to release pressure exceeding the predetermined nominal value of the valve, which may occur for various reasons in the heating system during operation.

The valves of this type use a diaphragm that keeps the valve in a closed position by means of a suitably calibrated spring depending on the operating pressure of the boiler or heating device.

The pressure relief valve is an automatic valve and ensures that the pressure of the medium in the system does not exceed the set value, which plays an important role in the safety and operation of the device.

It prevents exceeding the set value in the pipeline or in the equipment by discharging the medium from the system when the pressure of the medium in the equipment or pipeline rises above the set value.

Parts and fittings of water supply systems, such as valves, were historically made of metal, usually brass, and were able to withstand water pressures significantly higher than that of a standard water supply system which a heating device is connected to.

Currently, plastics, especially composites, have fully replaced metal in many applications, as they are sufficiently durable in devices working with normal water pressure in heating systems. By shaping the body from plastic material, it is possible to give the valve body or its part any functional shape, and therefore it is possible to produce a valve of a very simple design.

The pressure relief valve is fully assembled and calibrated during production and has the properties required by the applicable hydraulic standards, in particular
- it must ensure simple assembly (for example, in the design of a cartridge valve, connected to a holder, with a bayonet or fork connection, secured with a clip, etc.)
- it must be equipped with a relief mechanism, allowing manual discharge of the medium when servicing the device (for example, using a rotating wheel or a lever)
- the safety relief valve must be as small as possible, as it is normally mounted in hydraulic modules

Pressure relief valves made of plastic materials intended for use in heating devices are known in the state of the art.

EP 1 242 762 B1 describes an indestructible cartridge safety relief valve and cartridge holder assembly for a safety relief valve for liquid or gas circuits. Since the pressures to be set can take on different values, depending on the applications considered and due to possible modifications of the system, the above safety relief valve is removably connected to a holder as a cartridge. The valve has a calibration assembly, the spring of which is placed between the piston element and the calibration threaded ring nut. Any attempts to control the pressure adjusting ring nut designed to adjust the calibration pressure of the calibration assembly would cause the cover to break and the valve to get damaged.

FR2872881A3 describes a pressure relief valve for hanging boilers, where the valve body, seat and connections are made of plastic material
Calibration of the value of the opening pressure of the valve is possible, in the example shown, the threaded sleeve is guided along a rod, which is an integral part of the cap. The rod is threaded, and when it rotates, it is possible to move the threaded sleeve which the spring rests against.

Such a design of a safety relief valve is complicated.

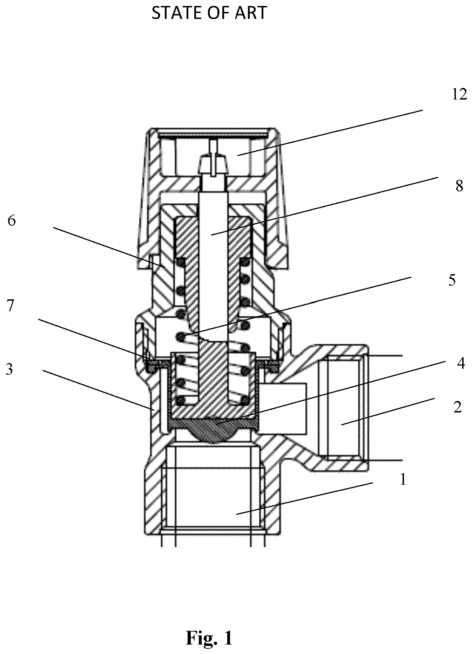

Another pressure relief valve made of brass, known in the state of the art (of the RBM manufacturer) is also calibrated in production and does not allow to adjust opening pressure. The cross-section of the valve is shown in Fig. 1.

The valve consists of a metal valve body, a valve chamber connected to the valve inlet and the valve outlet, a diaphragm resting on the valve seat and pressed by a calibrated spring, and a closing cap equipped with an external thread. The safety relief valve contains a relief mechanism for manual control of the valve using a rotating wheel.

When assembling the valve, the valve body is equipped with a diaphragm, the piston is fitted with a calibrated spring, and by turning and engaging the thread the closing cap firmly presses the diaphragm to the valve body with the calibrated spring.

A ring-shaped anti-friction pad prevents damage to the diaphragm when tightening the cap to the required torque.

When the relief mechanism with the cover is mounted, the pressure relief valve becomes unbreakable (it cannot be disassembled without damaging the cover), which complies with the applicable standards.

The disadvantage of the described valve is that the set pressure cannot be adjusted, changing the set pressure is possible only by using a different spring.

The impossibility of setting the pressure or finer adjustment of the valve turns out to be problematic, as the springs used in safety relief valves have their own tolerances, and therefore it is not possible to set the opening pressure to the nominal value accurately.

EP 0648 965 A1 discloses a module for a membrane safety valve to be mounted in a valve housing.The intention is to enable a module for a membrane safety valve for insertion in a valve housing to be manufactured in a simple and economical manner and to be used with different types of safety-valve housing. For this purpose, the module comprises a housing top part, a housing bottom part, a diaphragm clamped between the housing top part and the housing bottom part, a valve-closing member connected to the diaphragm, a loading spring which is arranged in the housing top part. This solution does not solve the opening pressure setting, it describes a possibility of universal assembly of internal components, which enables quick replacement in various pressure relief valve bodies.

FR 2 748 541 A3 relates to a safety valve device for pressurized water tanks, for example for accumulating water heaters or for other applications, which can form part of a safety valve group applicable to a cold-water inlet of a water heater. The focus is at reducing wear of the swivel cap when manually opening the safety valve, it does not deal with pressure adjustment.

US 2004/036050 A1 discloses a valve and an actuator for a valve. In particular, the invention relates to a valve actuator responsive to rotational input for moving a first valve part axially between open and closed positions relative to a second valve part. The cam mechanism does not transmit spring force to the movable valve member when the valve member is in the closed position. The aim of the solution is to prevent incorrect pressing of the membrane against the valve seat.

DE 102010045280 A1 describes a pressure relief valve for protecting boiler against high pressure. It has a valve seat, valve body and spring element forming valve insert, which is mountable as unit in valve housing and demountable as unit from housing.

None of the cited documents take into account the inaccuracy and tolerances of the calibrated spring used and do not deal with the precise setting of the spring pressure.

The presented invention eliminates this disadvantage and enables fine adjustment of the nominal pressure of the valve with no need to replace the calibrated spring, while the adjustment refers only to the cap closing the valve in its upper part.

### Description of the invention

Claim 1 discloses an adjustable pressure relief valve according to the invention. The dependent claims disclose preferred embodiments.

An adjustable pressure relief valve, intended for heating devices with a closed circuit of a heating medium, with a valve body equipped with a valve inlet and a valve outlet connected to a valve chamber, with a piston movably arranged in the valve chamber, on which there is a calibrated spring and a flexible closing diaphragm arranged. In the normal state, when the calibrated spring is pressing on the flexible closing diaphragm, the valve is closed, and wherein the valve is equipped with a two-part closing assembly, including an upper cap and a lower cap, for accurate setting of the nominal opening pressure by compressing the calibrated spring.

The upper cap is equipped with a thread to compress the spring and the lower cap is equipped with a stop to prevent the upper cap from being completely unscrewed. The calibrated spring is located between the upper cap and the piston. Spring compression can be finely adjusted by turning the upper cap and engaging the spring compression thread.

The lower cap is equipped with a thread to press the diaphragm to the valve body. There is an anti-friction pad arranged between the lower cap and the diaphragm to protect the diaphragm from damage. By turning and engaging the thread, the diaphragm is firmly pressed against the valve body by means of the calibrated spring. The safety relief valve is equipped with a relief mechanism to open the valve manually and to fix the two-piece closing assembly in the set position. The relief mechanism is advantageously equipped with a joint and a lever, after its installation both caps are fixed in the set positions and the valve cannot be disassembled without damage.

The valve is advantageously made of plastic, only the calibrated spring is metal.

### Brief description of the drawings

The invention is further explained using the figures below, without limitation thereto. The figures show:
Fig. 1 - a brass valve of the RBM manufacturer (the state of the art known) in cross-section
Fig. 2 - a plastic valve according to the presented invention with a split closing cap - in cross-section

### Preferred embodiments of the invention

Fig. 1 shows a brass valve from the RBM manufacturer - only for illustration and for better understanding of the advantages of the presented invention compared to the state of the art. The valve, known in the state of the art, is equipped with a closing cap 6, which is used to press the diaphragm 4 against the body 3 of the valve. The closing cap 6 does not allow the spring 5 to be pressed. The relief mechanism 12 is designed here as a relief mechanism for manual control of the valve using a rotating wheel.

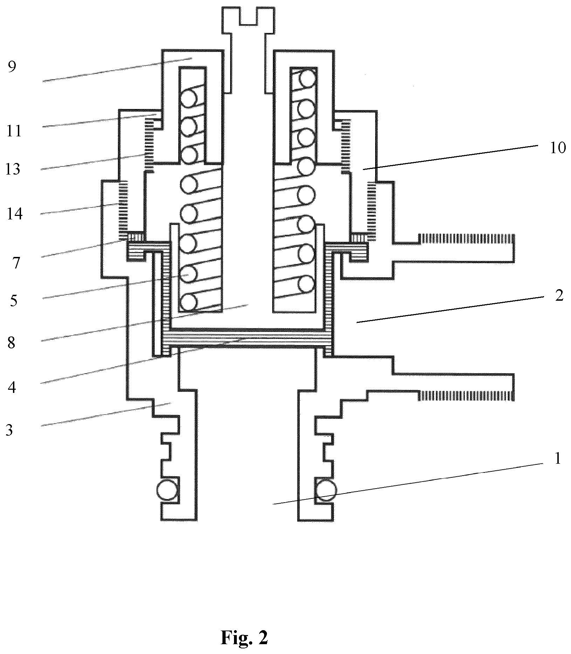

Fig. 2 shows a model of a pressure relief valve according to the presented invention.

An adjustable pressure relief valve, intended for heating devices with a closed circuit of a heating medium, with a valve body 3 equipped with a valve inlet 1 and a valve outlet 2 connected to a valve chamber.

There is a piston 8 movably arranged in the valve chamber and there is a calibrated spring 5 arranged on the piston 8. There is a flexible closing diaphragm 4 in the valve chamber between the inlet 1 and the outlet 2, which is pressed by a spring 5 so that the valve is closed in the normal state.

The safety relief valve is equipped with a two-part closing assembly, including an upper cap 9 and a lower cap 10 for pressing the diaphragm 4 to the valve body 3.

The calibrated spring 5 is inserted between the upper cap 9 and the piston 8 during assembly. To compress the spring 5, the upper cap 9 is equipped with a thread 13.

The lower cap 10 is equipped with a stop 11 preventing the upper cap 9 from being completely unscrewed.

The lower cap 10 is also equipped with a thread 14 to press the diaphragm 4 to the body 3 of the valve by means of a calibrated spring 5.

There is an anti-friction pad 7 arranged between the lower cap 10 and the diaphragm 4 to protect the diaphragm 4 from damage.

The pressure relief valve can be finely adjusted by turning the upper cap 9, while the spring 5 is compressed.

The relief mechanism (not shown) is advantageously equipped with a joint and a lever and is used for manual opening of the valve (service).

When the relief mechanism is mounted, the two-piece closing assembly, including the upper cap 9 and the lower cap 10, is fixed in a set position and the valve cannot be disassembled without damage.

The nominal pressure which the safety relief valve is calibrated to is, for example, 3 bars.

The valve is advantageously made of plastic, only the calibrated spring is metal.

### Industrial applicability

The adjustable pressure relief valve is designed to prevent exceeding the value set in a heating device with a closed circuit of a heating medium by discharging the medium from the system when the pressure of the medium in the device rises above the nominal value set.

It can also be used in other devices and its advantage is the possibility to set the nominal pressure accurately.

### List of reference marks

- 1: valve inlet
- 2: valve outlet
- 3: valve body
- 4: diaphragm
- 5: spring
- 6: closing cap
- 7: anti-friction pad
- 8: piston
- 9: upper cap
- 10: lower cap
- 11: stop
- 12: manual relief mechanism
- 13: thread
- 14: thread

## Claims

1. An adjustable pressure relief valve, intended for heating devices with a closed circuit of a heating medium, with a valve body (3) equipped with a valve inlet (1) and a valve outlet (2) connected to a valve chamber, with a piston (8) movably arranged in the valve chamber, on which there is a calibrated spring (5) and a flexible closing diaphragm (4) arranged, wherein the valve is closed in the normal state under the pressure of the calibrated spring (5) on the flexible closing diaphragm (4),
wherein the valve is equipped with a two-part closing assembly, including an upper cap (9) and a lower cap (10) for accurate setting of the nominal opening pressure,
the calibrated spring (5) is located between the upper cap (9) and the piston (8) and
the upper cap (9) is equipped with a thread (13) to compress the calibrated spring (5),
the lower cap (10) is equipped with a thread (14) to press the diaphragm (4) to the valve body (3)
and the valve is designed such that it is finely adjustable by turning the upper cap (9), while the spring (5) is compressed,
**characterized in that**
the lower cap (10) is equipped with a stop (11) to prevent the upper cap (9) from being completely unscrewed.

2. The adjustable pressure relief valve according to the claim 1,
**characterized in that**
there is an anti-friction pad (7) arranged between the lower cap (10) and the diaphragm (4) to protect the diaphragm (4) from damage.

3. The adjustable pressure relief valve according to any of the preceding claims,
**characterized in that**
it is equipped with a relief mechanism to open the valve manually and to fix the two-piece closing assembly in the set position.

## Patentansprüche

1. Einstellbares Druckbegrenzungsventil für Heizgeräte mit geschlossenem Heizmittelkreislauf, mit einem Ventilkörper (3), der mit einem Ventileinlass (1) und einem mit einer Ventilkammer verbundenen Ventilausgang (2) mit einem in der Ventilkammer beweglich angeordneten Kolben (8), an dem eine kalibrierte Feder (5) und eine flexible Schließmembran (4) angeordnet ist, wobei das Ventil im Normalzustand unter dem Druck der kalibrierten Feder (5) auf die flexible Schließmembran (4) geschlossen ist,
**dadurch gekennzeichnet, dass**
das Ventil mit einer zweiteiligen Verschlussvorrichtung ausgestattet ist, die eine obere Kappe (9) und eine untere Kappe (10) zur genauen Einstellung des Nennöffnungsdrucks umfasst,
die kalibrierte Feder (5) zwischen der oberen Kappe (9) und dem Kolben (8) eingesetzt und die obere Kappe (9) ist mit einem Gewinde (13) versehen ist,
die untere Kappe (10) mit einem Anschlag (11) versehen ist, der verhindert, dass die obere Kappe (9) vollständig abgeschraubt wird,
die untere Kappe (10) mit einem Gewinde (14) ausgestattet ist, um die Membran (4) mittels einer kalibrierten Feder (5) an den Ventilkörper (3) zu drücken
und das Ventil so konstruiert ist, dass es durch Drehen der oberen Kappe (9) einstellbar ist, während die Feder (5) zusammengedrückt ist.

2. Einstellbares Druckbegrenzungsventil nach Anspruch 1,
**dadurch gekennzeichnet, dass**
zwischen der unteren Kappe (10) und der Membrane (4) ein Gleitkissen (7) angeordnet ist, um die Membrane (4) vor Beschädigungen zu schützen.

3. Einstellbares Druckbegrenzungsventil nach einem der vorhergehenden Ansprüche,
**dadurch gekennzeichnet, dass**
das Druckbegrenzungsventil mit einem Entlastungsmechanismus ausgestattet ist, um das Ventil von Hand öffnen zu können und die zweiteilige Verschlusseinheit in der eingestellten Position zu fixieren.

## Revendications

1. Soupape de décharge de pression ajustable, destinée à des dispositifs de chauffage avec un circuit fermé d'un fluide chauffant, avec un corps de soupape (3) équipé d'une entrée de soupape (1) et d'une sortie de soupape (2) reliées à une chambre de soupape, avec un piston (8) agencé de manière mobile dans la chambre de soupape, sur lequel sont agencés un ressort calibré (5) et une membrane de fermeture flexible (4), dans laquelle la soupape est fermée à l'état normal sous la pression du ressort calibré (5) sur la membrane de fermeture flexible (4),
dans laquelle la soupape est équipée d'un ensemble de fermeture en deux parties, incluant un capuchon supérieur (9) et un capuchon inférieur (10) pour un réglage précis de la pression d'ouverture nominale, le ressort calibré (5) est situé entre le capuchon supérieur (9) et le piston (8), et le capuchon supérieur (9) est équipé d'un filetage (13) pour comprimer le ressort calibré (5), le capuchon inférieur (10) est équipé d'un filetage (14) pour presser la membrane (4) sur le corps de soupape (3), et la soupape est conçue de telle sorte qu'elle peut être ajustée finement en tournant le capuchon supérieur (9), tandis que le ressort (5) est comprimé,
**caractérisée en ce que**
le capuchon inférieur (10) est équipé d'une butée (11) pour empêcher un dévissage complet du capuchon supérieur (9).

2. Soupape de surpression ajustable selon la revendication 1,
**caractérisée en ce que**
un tampon antifriction (7) est agencé entre le capuchon inférieur (10) et la membrane (4) pour protéger la membrane (4) de la détérioration.

3. Soupape de décharge de pression ajustable selon l'une quelconque des revendications précédentes,
**caractérisée en ce que**
elle est équipée d'un mécanisme de décharge pour ouvrir la soupape manuellement et pour fixer l'ensemble de fermeture en deux parties dans la position réglée.
